# EUROPEAN PATENT SPECIFICATION

(11) **EP 0 793 240 B1**
(45) Date of publication and mention of the grant of the patent: **07.08.2002**
(21) Application number: 97400445.9
(22) Date of filing: 27.02.1997
(51) Int. Cl.: H01B 7/29, H01B 13/06, C08G 73/18

(54) **Heat-resistant, flat electrical wire comprising a benzimidazole-based polymer coating**
Wärmebeständiger, flacher leitfähiger Draht mit einer Benzimidazolpolymer enthaltenden Beschichtung
Fil conducteur plat résistant à la chaleur comportant un revêtement polymère à base de benzimidazole

(30) Priority: 29.02.1996 JP 4303196
(43) Date of publication of application: 03.09.1997
(73) Proprietor: SUMITOMO WIRING SYSTEMS, LTD., Yokkaichi City Mie 510 (JP)
(72) Inventor: Onishi, Yasuhiko, c/o Sumitomo Wiring Systems, LTD, Yokkaichi-city, Mie 510 (JP); Matsumoto,Shinichi,c/o Sumitomo Wiring Systems Ltd, Yokkaichi-city, Mie 510 (JP)
(74) Representative: Bertrand, Didier

(56) References cited:
- EP-A- 0 566 148
- US-A- 5 483 021
- PATENT ABSTRACTS OF JAPAN vol. 003, no. 131 (E-148), 31 October 1979 & JP 54 109188 A (SUMITOMO ELECTRIC IND LTD), 27 August 1979,
- IBM TECHNICAL DISCLOSURE BULLETIN, vol. 18, no. 7, December 1975, NEW YORK, US, page 2143 XP002032652 ANONYMOUS: "Enameling Process for Square, Rectangular and Flat Wire. December 1975."
- PATENT ABSTRACTS OF JAPAN vol. 013, no. 312 (E-788), 17 July 1989 & JP 01 084517 A (FURUKAWA ELECTRIC CO LTD:THE), 29 March 1989,

## Description

The present invention relates to a flat heat-resistant electrical wire. It can be applied, for example, to an electrical cable which is required to have high heat resistance.

The invention relates also to a process of manufacturing such heat-resistant electrical wires and to their use.

A flat electrical wire having a substantially rectangular cross-section (hereinafter "flat electrical wire") is applied, for example, to magnetic coils which are used in various electrical devices. The shape of the wire prevents it from dislocation or slippage caused by a variation of the magnetic field.

There already exist flat wires such as a polyimide coated wires, enamel-coated wires, highly heat-resistant, cementing enamel-coated wires, etc.

The recent years have witnessed a great development in the miniaturization of electrical devices and high density assembly technology. This phenomenon has created a demand for the parts used in electrical devices to be heat-resistant.

However, the maximum operating temperatures for a polyimide coated flat wire, an enamel-coated wire or a highly heat-resistant, cementing enamel-coated wire are respectively 250°C, 150 to 220°C and 220°C. This level of heat resistance is still not satisfactory for the above-mentioned demands.

In a known flat wire manufacturing process, a cross-sectionally circular conductor is first rolled to give a flat conductor having an approximately rectangular cross-section. The flat conductor is then covered with a varnish solution and baked to give a flat coated conductor.

A varnish solution of a benzimidazole-based polymer may be used in this known method to obtain a flat conductor coated with a reaction product of polymers PBI.

However, applying a benzimidazole-based polymer varnish to a flat conductor does not always make it possible to obtain a uniform and homogeneous coating. In particular, the angle or corner portions of the flat conductor tend to have a thinner coating or to form pin holes, which makes the wire incapable of resisting high voltages.

On the other hand, a process of first plating a cross-sectionally circular conductor and of rolling it thereafter to obtain a flat conductor is described in U.S. patent 5,483,021. However, this process relates to the plating of a corrosion-resistant material; the mechanical problem with which the invention is concemed is not approached in this art.

It is therefore an object of the present invention to provide a flat conductor or electrical wire that is highly heat resistant and devoid of the above-mentioned defects.

Another object is to provide a convenient method of manufacturing such a flat conductor or electrical wire.

Still another object is to provide use for such a conductor or electrical wire.

To this end, the invention provides a flat electrical wire having a substantially rectangular cross-section, said wire comprising a flat elongate element containing at least an electrically conductive part; and an insulation coating, said coating being comprised of a benzimidazole-based polymer.

Preferably, the benzimidazole-based polymer is a product obtainable by reacting a plurality of polymers having the formula (I): 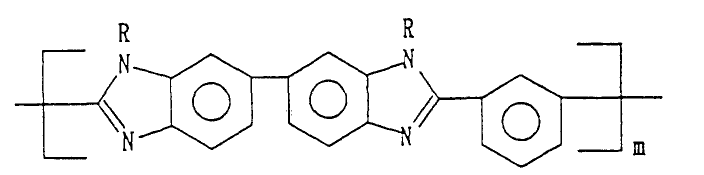 where R indicates a member chosen from the group consisting of a hydrogen atom and an alkyl group having 1 to 4 carbon atoms; and m indicates an integer equal to at least 5 and is chosen to yield solvent-soluble polymers. The maximum value of m is about 3,500.

The flat elongate element may be either an electrical wire or an electrical wire coated with an insulating layer.

The invention also provides a method of preparing a flat electrical wire having a substantially rectangular cross-section, the wire comprising a flat elongate element containing at least an electrically conductive part; and an insulation coating, the coating being comprised of a benzimidazole-based polymer, the method comprising the steps of:
a) dissolving a plurality of benzimidazole-based polymers in a solvent, thereby obtaining a varnish solution;
b) providing an elongate element having a substantially circular cross-section;
c) applying the varnish solution to the elongate element, thereby obtaining an elongate element laterally covered with the varnish solution;
d) baking the varnish-covered elongate element for reacting the plurality of benzimidazole-based polymers, whereby the elongate element is coated with a product obtainable by the reaction;
e) repeating, where appropriate, steps c) and d); and,
f) rolling the coated elongate element having a circular cross-section, thereby obtaining a flat electrical wire coated with a product obtainable by reacting the plurality of benzimidazole-based polymers, the wire having a substantially rectangular cross-section.

Preferably, the solvent used in step a) is an alkaline solvent.

The method may further comprise the step of adding a radical-polymerization initiating agent in the varnish solution used in step a).

Preferably, the plurality of benzimidazole-based polymers used in step a) have the formula (I): 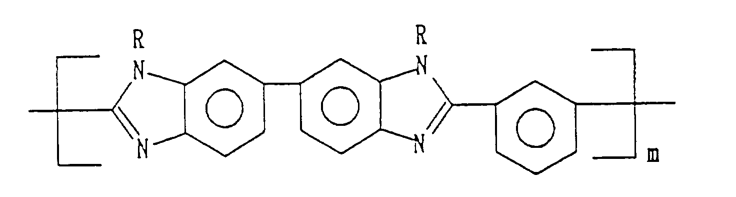 where R indicates a member chosen from the group consisting of a hydrogen atom and an alkyl group having 1 to 4 carbon atoms; and m indicates an integer equal to at least 5 and is chosen to yield solvent-soluble polymers. The maximum value of m is about 3,500.

The elongate element having a substantially circular cross-section may be an electrical wire or an electrical wire coated with an insulating layer.

The invention further provides a flat electrical wire having a substantially rectangular cross-section and resisting temperatures in excess of approximately 350°C and high voltage, the wire comprising a flat elongate element containing at least an electrically conductive part; and an insulation coating, the coating being comprised of a benzimidazole-based polymer, the flat electrical wire being obtainable by the method comprising the steps of:
a) dissolving a plurality of benzimidazole-based polymers in a solvent, thereby obtaining a varnish solution;
b) providing an elongate element having a substantially circular cross-section;
c) applying the varnish solution to the elongate element, thereby obtaining an elongate element laterally covered with the varnish solution;
d) baking the varnish-covered elongate element for reacting the plurality of benzimidazole-based polymers, whereby the elongate element is coated with a product obtainable by the reaction;
e) repeating, where appropriate, the steps c) and d); and,
f) rolling the coated elongate element having a circular cross-section, thereby obtaining a flat electrical wire coated with a product obtainable by reacting the plurality of benzimidazole-based polymers, the wire having a substantially rectangular cross-section.

Preferably, the benzimidazole-based polymer is a product obtainable by reacting a plurality of polymers having the formula (I).

The flat elongate element may be an electrical wire or an electrical wire coated with an insulating layer.

The flat electrical wire according to the invention, may be used for cabling in the electrical circuitry for aircraft, high voltage applications, communication purposes or for making electric heaters.

Until now, no insulation coating has been available for use at a temperature exceeding 350°C. The insulation coating formed by reacting benzimidazole-based polymers has a remarkable feature of withstanding temperatures in excess of 350°C, and even up to 760°C, though for a limited time.

Further, conventional flat wire coated with a heat-resistant material could not be manufactured through the method according to the present invention, for the coating effected on a round wire could not mechanically withstand a subsequent rolling.

The method adopted for the present invention efficiently and unexpectedly eliminates the defects known in the prior art.

The above and other objects, features and advantages of the invention will be made apparent from the following description of the preferred embodiments, given as a non-limiting example, with reference to the accompanying drawings, in which:
- Figure 1 shows the cross-section of a flat electrical wire coated with a benzimidazole-based polymer according to the invention;
- Figure 2 is a schematic process for a varnish application to a wire and subsequent baking;
- Figure 3 shows a cross-section of a coated circular electrical wire before rolling;
- Figure 4 shows a rolling device for rolling a circular electrical wire;
- Figure 5 shows a cross-sectional view of the wire undergoing the rolling process; and
- Figure 6 shows the cross-section of an insulation-layer coated, flat electrical wire, coated with a benzimidazole-based polymer according to the invention.

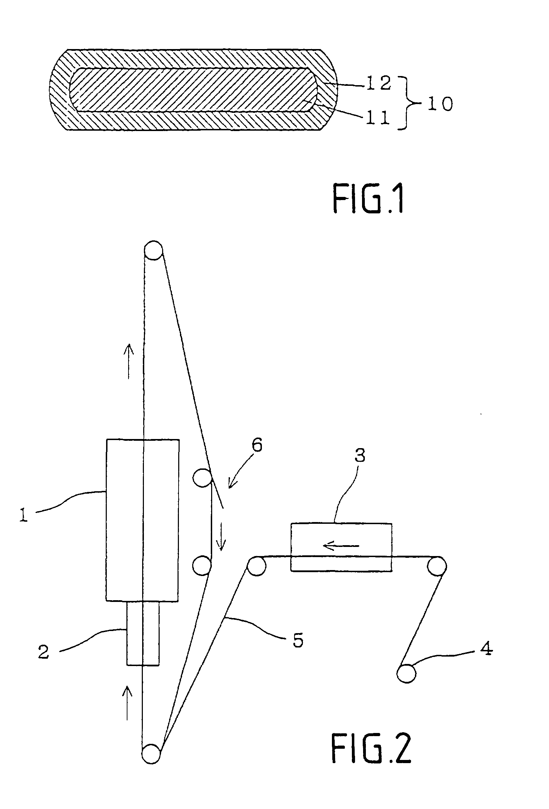

Figure 1 shows a flat electrical wire 10 comprising a conductive part 11 having a flat and substantially rectangular cross-section, and an insulation coating 12 of a benzimidazole-based polymer (hereinafter referred to as polymer PBI) coated around the wire.

The conductive part 11 may include copper wire, nickel-chromium wire, stainless steel wire or other conductive materials.

The polymers PBI are dissolved in a specific solvent to prepare a PBI vamish solution. When PBI has a low degree of polymerization, a radical-polymerization initiating agent is preferably added. The solvent for the varnish solution preparation includes a basic solvent such as dimethylacetamide (DMA), dimethylformamide (DMF), pyridine, etc. or a hydrogen-bonding shielding solvent such as dimethylsulphoxide (DMSO), etc.

The varnish concentration may vary from 1% to 80% by weight per unit volume, but is preferably in the range of 5% to 40% (w/v).

The radical-polymerization initiating agent may include, for example, benzoyl peroxide, lauroyl peroxide, di-t-butyrophthalate peroxide, azo-bis-isobutyronitrile, phenylazoalkylsulphonic acid, N-nitroso-N-acyl compound, etc.

The radical-polymerization initiator is added to the PBI varnish solution in order to neutralize polymerization-inhibiting agents present in DMA solution etc. to be used as varnish solvent and to cause the PBI molecules to stack. This addition may promote the cross-linking reaction of PBI at temperature, occurring during the baking treatment (discussed below), and form a sufficiently resistant PBI coating.

The PBI vamish solution is applied to the surface of a cross-sectionally circular electrical wire and fixed thereto by baking. These treatments are usually repeated. Figure 2 shows a device practically used for this purpose consisting of a baking furnace 1, a varnish applying unit 2, a continuous annealing furnace 3, and a coiling unit 4. In this device, a wire 5 such as an electrical conductor or a coated electrical conductor wound on the coiling unit 4, is uncoiled therefrom, annealed in the continuous annealing furnace 3, sent to the varnish applying unit 2 where the varnish solution is applied to the wire, then sent to the baking fumace 1 where the varnish is adhered to the wire by baking.

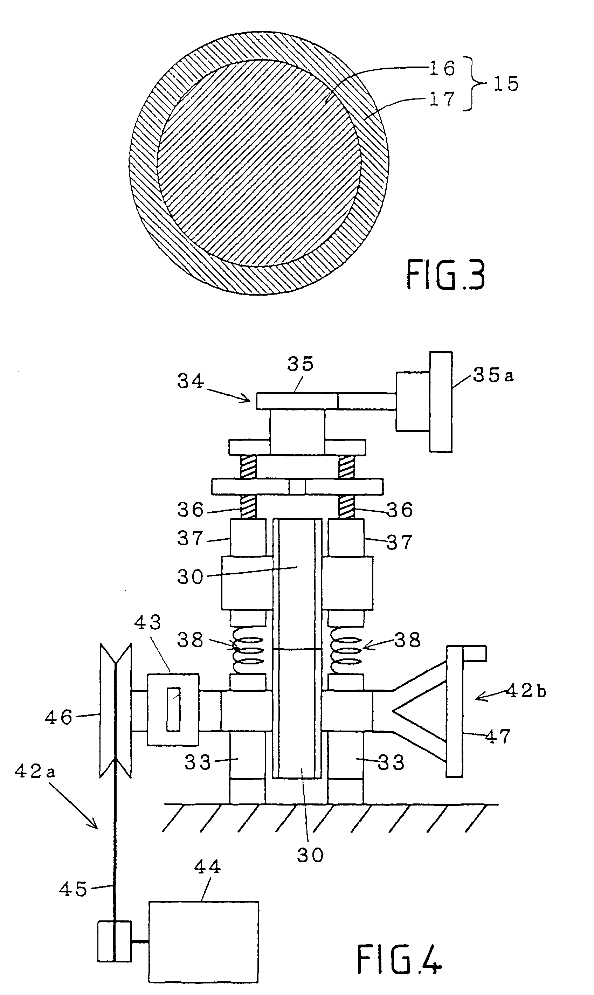

The varnish-baked wire 5 is repeatedly processed through the varnish applying unit 2 and the baking furnace 1. As shown in Figure 3, the cross-sectionally circular electrical wire 15, having a conductive part 16 and a PBI coating 17 is then extracted from a delivering unit 6.

According to general handling processes, when the cross-sectionally circular electrical conductor 16 has a diameter less than 0.6 mm, the varnish applying unit may be a horizontal furnace, whilst, when the diameter is larger than 0.6 mm, a vertical furnace may be used.

This principle may be applied for the PBI application and baking in accordance with the present invention by choosing the type of furnace depending on circumstances. One may also appropriately modify the application frequency, the baking temperature and the varnish applying speed, according to the type of varnish solution to be baked and the type of baking furnace.

The application frequency may vary from once to several hundred times, but vary more appropriately from twice to 20 times.

The baking temperature may be chosen between room temperature and 1000°C, but preferably chosen between 500°C and 800°C.

A cross-sectionally circular electrical wire 15 consisting of a round conductor 16 and a PBI coating 17 is then rolled to obtain a flat electrical wire 10 having an approximately rectangular cross-section.

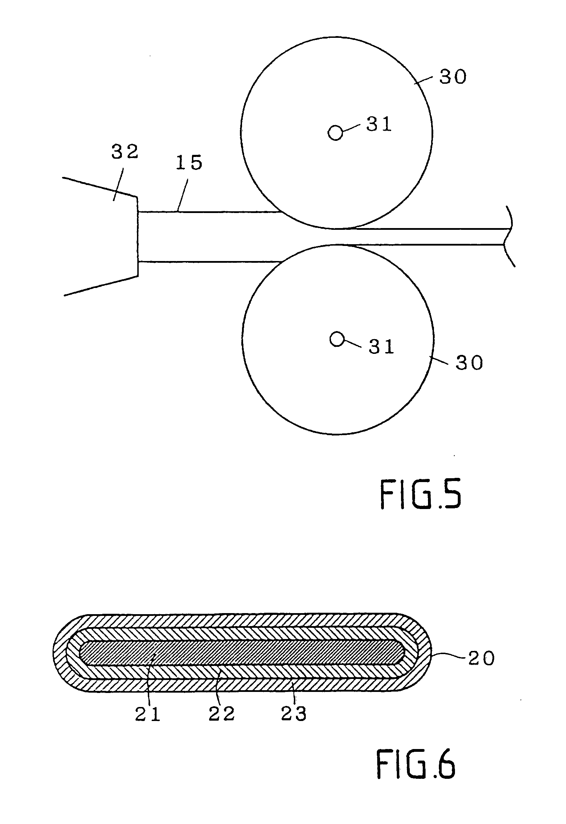

An example of a rolling device for the electrical wire having a circular cross-section 15 is shown by Figures 4 and 5. The device comprises paired upper and lower rolls 30, an adjusting mechanism 34 for setting the gauge between the rolls, elastic means 38 fixed between the roll axles and a driving mechanism 42a, 42b for driving the lower roll 30.

The above-mentioned rolls 30 are made of a super-hard material such as a ceramic-metal composite and are held by a pair of parallel axles 31 in a freely rotatable way.

A ceramic nozzle 32 is provided in front of the rolls so that the tip of the nozzle can feed the wire into the gap between the rolls (figure 5).

The lower roll 30 is held in a pair of lower supporting units 33 through axle 31 in a freely rotatable way.

One end of the axle 31 is linked to a motor-driven rotating mechanism 42a through a coupling unit 43, whilst the other end of the axle 31 is linked with a manually-driven rotating mechanism 42b.

The motor-driven rotating mechanism 42a transmits the rotating movement of motor 44 to a pulley 46 through transmission belt 45, and then the rotating movement of the pulley 46 is transmitted to the lower roll 30, such that both rolls are rotated. The manually-driven mechanism 42b has a crank handle 47. By operating this handle, an operator can also rotate the lower roll 30.

The upper roll 30 is held in a pair of upper supporting units 37 through axle 31. The upper supporting units 37 are held by an adjusting mechanism 34 in such a way that the units 37 can freely move up or down.

The adjusting mechanism 34 consists of a pair of gauge adjusting rods 36 extending upwardly from the upper supporting units 37, and a gear mechanism 35 which transmits a rotating drive of a manual handle 35a to the pair of rods 36.

The above-mentioned rods 36 have a tapped surface. Their bottom ends are connected to the upper supporting units 37, whilst their top ends are connected to the gear mechanism 35.

When the handle 35a is rotated, the rods 36 rotate so that the supporting units 37 can move up or down depending on the rotating direction. In this way, the gauge between two rolls 30 is adjusted.

The elastic means 38, placed between the upper and the lower supporting units, may comprise a spring means and push the rolls 30 in the opposite direction. In this way, when adjusting the gauge between the rolls, manual handle 35a is more easily operated.

The round wire 15 is rolled by the above-described device as follows:

As shown in Figure 5, the gauge between two rolls 30 is preset by the adjusting mechanism 34. The lower roll 30 is rotated by a motor-driven mechanism 42a or a manually-driven mechanism 42b. Then, a round cross-section wire 15 already coated with PBI coating 17 is fed between the rolls from a ceramic nozzle 32 provided near the rolls. The wire 15 is entrained between the rolls 30 due to the rotating movement of the lower roll 30. The upper roll is also entrained by the passage of the wire 15. The round section wire 15 is thus continuously rolled by the rolls 30 to yield a flat section wire 10 shown in Fig. 1.

The gauge between the rolls 30 is appropriately adjusted depending on the desired thickness of a flat wire to be manufactured.

The flat wire 10 thus manufactured has a high heat resistance due to a PBI polymer coating 12 and has a high voltage resistance because of the uniformity of the insulation coating 12. This uniformity or homogeneity of the coating is due to the fact that PBI application and baking is effected on the round-section wire 15 before rolling, instead of being effected on the flat-section wire 10 after the rolling. Furthermore, this manufacturing method has a cost advantage over the known method.

It is to be stressed that the above manufacturing method, i.e. firstly coating on a round--section wire, then rolling to yield a flat-section wire, is not appropriate for making a conventional heat-resistant, coated wire such as a polyimide-coated flat wire, an enamel-coated flat wire or a high heat-resistant, cementing enamel-coated flat wire.

This results from the fact that the insulating materials used for the conventional flat wires have a lower mechanical resistance. Rolling such a material after coating in many cases incurs cracks in the insulating coating.

On the other hand, as shown in Table 1, the PBI coating 12 according to the invention has sufficient strength and can be rolled after the coating 12 is formed, without the risk of forming cracks.

As shown in Figure 6, the flat wire 20 may comprise a flat conductor 21 having a substantially rectangular cross-section, an intermediate insulation coating 22 consisting of polyimide, enamel, etc. and an exterior PBI coating 23. This type of wire also shows a high heat-resistance.

Examples of the wire manufacturing method according to the present invention are shown hereinafter.

### Example 1

A nickel-plated copper wire having an external diameter of 0.5 mm was soaked in a varnish solution consisting of 30 parts of polymer PBI and 70 parts of solvent DMA, the varnish solution further comprising 0.1% (w/v) of AIBN initiator, by means of which the varnish was applied to the wire. The varnish was adhered thereto by baking at a line speed of 50 m/min at 600°C. The above procedure was repeated 8 times to obtain a PBI film-coated, nickel-plated copper wire having a circular cross-section.

The PBI coated, nickel-plated copper wire was rolled in the above-mentioned roll stand, to obtain a flat wire having a thickness to width ratio of 1:10.

### Example 2

A nickel-plated copper wire having an external diameter of 0.5 mm was soaked in a vamish solution consisting of 30 parts of polymer PBI, 60 parts of solvent DMA and 10 parts of DMSO, the varnish solution further comprising 0.1% (w/v) of AIBN initiator, by means of which the varnish was applied to the wire. The varnish was adhered thereto by baking at a line speed of 20 m/min at 600°C. The above procedure was repeated 8 times to obtain a PBI coated, nickel-plated copper wire having a circular cross-section.

The PBI coated, nickel-plated copper wire was rolled in the roll stand mentioned above to obtain a flat wire having a thickness to width ratio of 1:5.

### Example 3

An oxygen-free copper wire having a diameter of 0.36 mm was soaked in a varnish solution consisting of 20 parts of polymer PBI and 80 parts of solvent DMA, by means of which the varnish was applied to the wire. The varnish was adhered thereto by baking at a line speed of 10 m/min at 500°C. The above procedure was repeated 10 times to obtain a PBI coated, oxygen-free copper wire having a circular cross-section.

The wire was rolled in the roll stand as described above to obtain a flat wire having a thickness to width ratio of 1:20.

### Example 4

A nickel-plated copper wire having an external diameter of 1.5 mm was soaked in varnish solution consisting of 55 parts of polymer PBI and 45 parts of solvent DMA, by means of which the varnish was applied to the wire. The varnish was adhered thereto by baking at a line speed of 60 m/min at 700°C. The above procedure was repeated 20 times to obtain a PBI coated, nickel-plated copper wire having a circular cross-section.

The wire was rolled in the roll stand as described above to obtain a flat wire having a thickness to width ratio of 1:4.

### Example 5

A nickel-plated copper wire having an external diameter of 2.5 mm was soaked in a varnish solution consisting of 65 parts of polymer PBI and 35 parts of solvent DMA, by means of which the varnish was applied to the wire. The varnish was adhered thereto by baking at a line speed of 30 m/min at 600°C. The above procedure was repeated 15 times to obtain a PBI coated, nickel-plated copper wire having a circular cross-section.

The wire was rolled in the roll stand as described above to obtain a flat wire having a thickness to width ratio of 1:5.

### Example 6

A nickel-copper alloyed steel wire having a diameter of 1.5 mm was soaked in a varnish solution consisting of 55 parts of polymer PBI and 45 parts of solvent DMA, by means of which the varnish was applied to the wire. The varnish was adhered thereto by baking at a line speed of 30 m/min at 500°C. The above procedure was repeated 20 times to obtain a PBI coated, nickel-copper alloyed steel wire having a circular cross-section.

The wire was rolled in the roll stand as described above to obtain a flat wire having a thickness to width ratio of 1:10.

### Example 7

An Nb₃-Sn alloyed steel wire having a diameter of 1.5 mm was soaked in a varnish solution consisting of 55 parts of polymer PBI and 45 parts of solvent DMA, by means of which the varnish was applied to the Nb₃-Sn alloyed steel wire. The varnish was applied thereto by baking at a line speed of 30 m/min at 500°C. The above procedure was repeated 20 times to obtain a PBI coated, Sb₃-Sn alloyed steel wire having a circular cross-section.

The wire was rolled in the roll stand as described above to obtain a flat wire having a thickness to width ratio of 1:3.

### Example 8

A Va-Ga alloyed steel wire having a diameter of 1.5 mm was soaked in a varnish solution consisting of 55 parts of polymer PBI and 45 parts of solvent DMA, by means of which the varnish was applied to the Va-Ga alloyed steel wire. The varnish was adhered thereto by baking at a line speed of 30 m/min at 500°C. The above procedure was repeated 20 times to obtain a PBI coated wire having a circular cross-section.

The wire was rolled in the roll stand as described above to obtain a flat wire having a thickness to width ratio of 1:3.

### Example 9

An Nb-Ti alloyed steel wire having a diameter of 1.5 mm was soaked in a varnish solution consisting of 55 parts of polymer PBI and 45 parts of solvent DMA, by means of which the varnish was applied to the Nb-Ti alloyed steel wire. The varnish was adhered thereto by baking at a line speed of 30 m/min at 500°C. The above procedure was repeated 20 times to obtain a PBI coated wire having a circular cross-section.

The wire was rolled in the roll stand as described above to obtain a flat wire having a thickness to width ratio of 1:3.

### Example 10

An Nb₃-Al alloyed steel wire having a diameter of 1.5 mm was soaked in a varnish solution consisting of 55 parts of polymer PBI and 45 parts of solvent DMA, by means of which the varnish was applied to the Nb₃-Al alloyed steel wire. The varnish was adhered thereto by baking at a line speed of 30 m/min at 500°C. The above procedure was repeated 20 times to obtain a PBI coated wire having a circular cross-section.

The wire was rolled in the roll stand as described above to obtain a flat wire having a thickness to width ratio of 1:3.

### Example 11

A nickel-chromium (20%) alloyed steel wire having a diameter of 0.36 mm was soaked in a vamish solution consisting of 20 parts of polymer PBI and 80 parts of solvent DMA, by means of which the varnish was applied to the Ni-Cr alloyed steel wire. The varnish was adhered thereto by baking at a line speed of 10 m/min at 500°C. The above procedure was repeated 10 times to obtain a PBI coated wire having a circular cross-section.

The wire was rolled in the roll stand as described above to obtain a flat wire having a thickness to width ratio of 1:3.

### Example 12

A tungsten (W) wire having a diameter of 0.36 mm was soaked in a varnish solution consisting of 20 parts of polymer PBI and 80 parts of solvent DMA, by means of which the varnish was applied to the tungsten (W) wire. The varnish was adhered thereto by baking at a line speed of 10 m/min at 500°C. The above procedure was repeated 10 times to obtain a PBI coated wire having a circular cross-section.

The wire was rolled in the roll stand as described above to obtain a flat wire having a thickness to width ratio of 1:3.

Tables 2 and 3 show general features of the samples obtained by foregoing examples, as well as features of the circular cross-section wires before rolling.

Dielectric breakdown testing of the PBI coated flat wire before ageing was performed by applying an alternating current voltage for 1 minute, in accordance with JIS-C-3005.

Thermal shock testing was performed at 220°C for 30 minutes after the sample was elongated by 20%.

Wear-resistance testing was effected under a load of 4N, in accordance with JASO D611.

Table 3 also shows the results of dielectric breakdown tests after ageing at 250°C for 168h, effected on the samples of Examples 1 to 3.

Tables 2 and 3 thus indicate that the samples according to the invention have a high heat resistance and also a high dielectric breakdown resistance.

**Table 1**

| | | |
|---|---|---|
| Tensile Strength | ASTMD638 | 1,632 kgf/cm² |
| Modulus of Elasticity in Tension | ASTMD638 | 60,180 kgf/cm² |
| | | |
| Flexural Strength | ASTMD790 | 2,240 kgf/cm² |
| Modulus of Elasticity in Flexure | ASTMD790 | 66,300 kgf/cm² |
| | | |
| Compressive Strength | ASTMD695 | 4,080 kgf/cm² (12%*) |
| Modulus of Elasticity in Compression | ASTMD695 | 63,240 kgf/cm² |

| | | |
|---|---|---|
| * Strain % at yield point (Based on the standard test ASTM) | | |

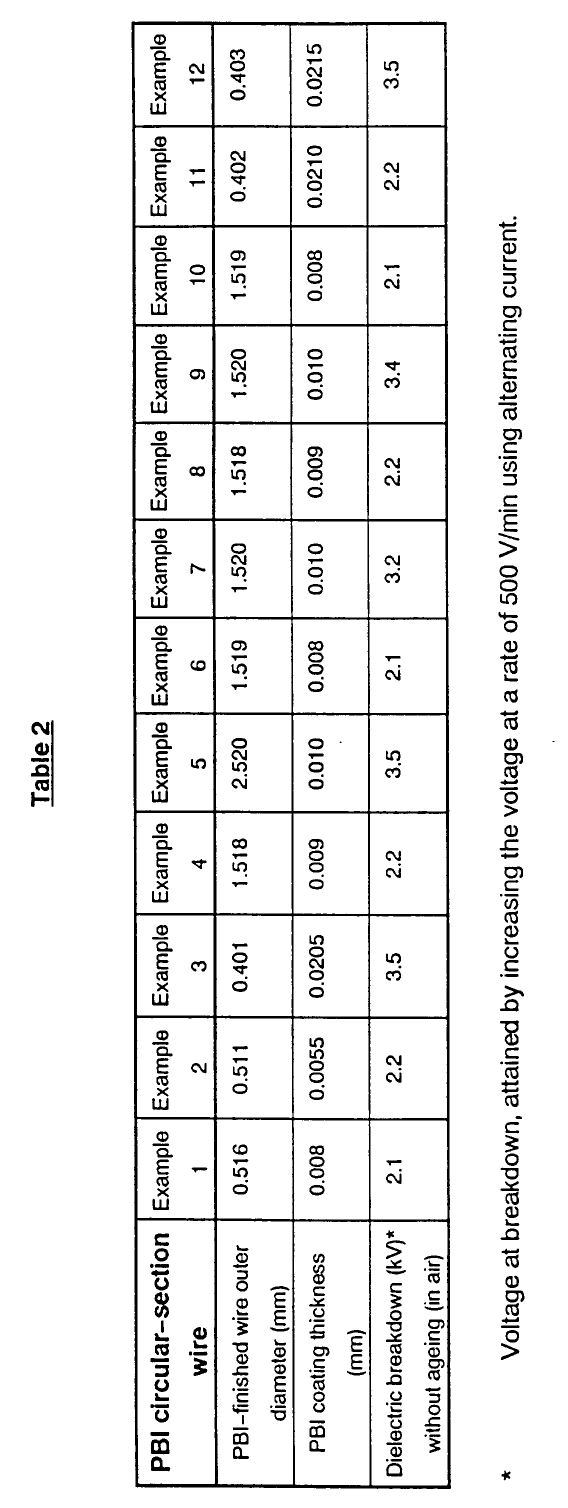

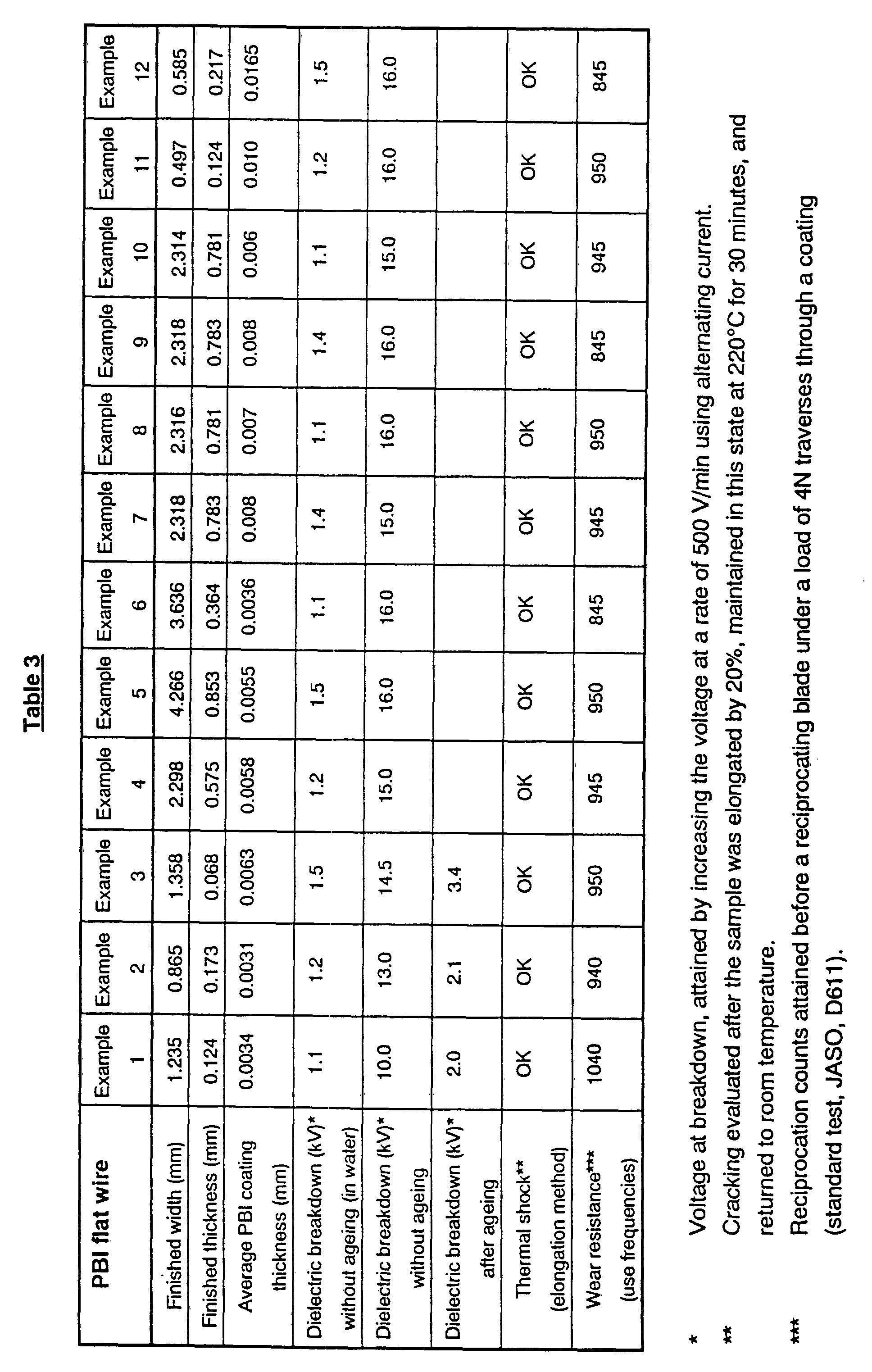

## Claims

1. A flat electrical wire (10, 20) having a substantially rectangular cross-section, said wire (10, 20) comprising a flat elongate element (11) containing at least an electrically conductive part; and an insulation coating (12, 23),
**characterised in that** said coating (12, 23) is comprised of a benzimidazole-based polymer.

2. The flat electrical wire (10, 20) according to claim 1, wherein said benzimidazole-based polymer is a product obtainable by reacting a plurality of polymers having the formula (I): 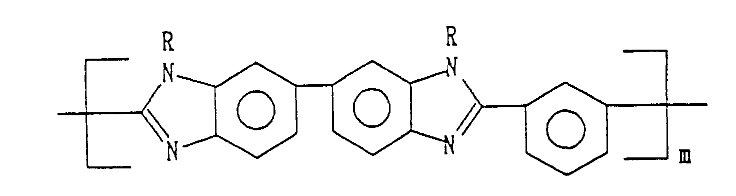 where R indicates a member chosen from the group consisting of a hydrogen atom and an alkyl group having 1 to 4 carbon atoms; and m indicates an integer equal to at least 5 and is chosen to yield solvent-soluble polymers.

3. The flat electrical wire (10, 20) according to claim 1 or 2, wherein said flat elongate element (11) is either an electrical wire or an electrical wire (21) coated with an insulating layer (22).

4. A method of preparing a flat electrical wire (10, 20) having a substantially rectangular cross-section, said wire (10, 20) comprising a flat elongate element (11) containing at least an electrically conductive part; and an insulation coating (12, 23),
**characterised in that** said coating (12, 23) is comprised of a benzimidazole-based polymer, and that said method comprises the steps of:
a) dissolving a plurality of benzimidazole-based polymers in a solvent, thereby obtaining a varnish solution;
b) providing an elongate element (16) having a substantially circular cross-section;
c) applying said varnish solution to the elongate element (16), thereby obtaining an elongate element (16) covered with said varnish solution;
d) baking said varnish-covered elongate element (16) for reacting said plurality of benzimidazole-based polymers, whereby said elongate element (16) is coated with the product (17) obtained by said reaction;
e) repeating, where appropriate, steps c) and d); and,
f) rolling said coated elongate element (15) having a substantially circular cross-section, thereby obtaining a substantially flat electrical wire (10, 20) coated with the product obtained by reacting said plurality of benzimidazole-based polymers, said wire (10, 20) having a substantially rectangular cross-section.

5. The method according to claim 4, wherein said solvent used in step a) is an alkaline solvent.

6. The method according to claim 4 or 5, further comprising the step of adding a radical-polymerization initiating agent in said varnish solution used in step a).

7. The method according to any one of claims 4 to 6, wherein said plurality of benzimidazole-based polymers used in step a) have the formula (I): 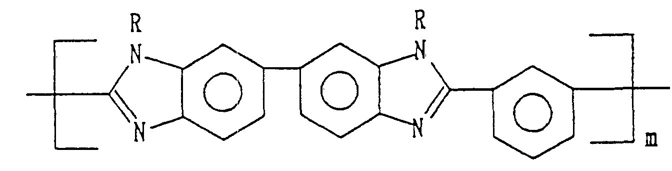 where R indicates a member chosen from the group consisting of a hydrogen atom and an alkyl group having 1 to 4 carbon atoms; and m indicates an integer equal to at least 5 and is chosen to yield solvent-soluble polymers.

8. The method according to any one of claims 4 to 7, wherein said elongate element (16) having a substantially circular cross-section is either an electrical wire or an electrical wire coated with an insulating layer.

9. A flat electrical wire (10, 20) having a substantially rectangular cross-section, said wire (10, 20) comprising a flat elongate element (11) containing at least an electrically conductive part; and an insulation coating (12, 23),
**characterised in that** said coating (12, 23) is comprised of a benzimidazole-based polymer, resisting temperatures in excess of approximately 350°C and high voltage, and that said flat electrical wire (10, 20) is obtainable by the method comprising the steps of:
a) dissolving a plurality of benzimidazole-based polymers in a solvent, thereby obtaining a varnish solution;
b) providing an elongate element (16) having a substantially circular cross-section;
c) applying said varnish solution to said elongate element (16), thereby obtaining an elongate element (16) covered with said varnish solution;
d) baking said varnish-covered elongate element (16) for reacting said plurality of benzimidazole-based polymers, whereby said elongate element (16) is coated with the product (17) obtained by said reaction;
e) repeating, where appropriate, the steps c) and d); and,
f) rolling said coated elongate element (15) having a substantially circular cross-section, thereby obtaining a substantially flat electrical wire (10, 20) coated with the product obtained by reacting said plurality of benzimidazole-based polymers, said wire (10, 20) having a substantially rectangular cross-section.

10. The flat electrical wire (10, 20) according to claim 9, wherein said benzimidazole-based polymer is a product obtainable by reacting a plurality of polymers having the formula (I): 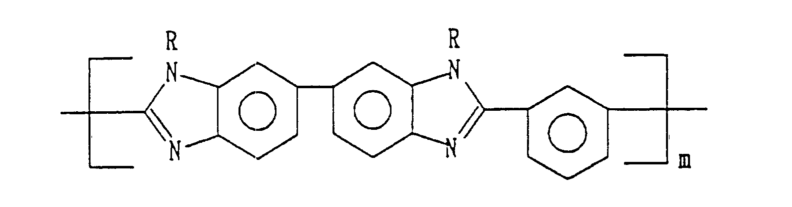 where R indicates a member chosen from the group consisting of a hydrogen atom and an alkyl group having 1 to 4 carbon atoms; and m indicates an integer equal to at least 5 and is chosen to yield solvent-soluble polymers.

11. The flat electrical wire (10, 20) according to claim 9 or 10, wherein said flat elongate element (11) is either an electrical wire or an electrical wire (21) coated with an insulating layer (22).

12. Use of the flat electrical wire (10, 20) according to any one of claims 1 to 3 and claims 9 to 11, in cabling for circuitry in an aircraft.

13. Use of the flat electrical wire (10, 20) according to any one of claims 1 to 3 and claims 9 to 11, in cabling for circuitry for high voltage applications.

14. Use of the flat electrical wire (10, 20) according to any one of claims 1 to 3 and claims 9 to 11, in cabling for circuitry for communications apparatus.

15. Use of the flat electrical wire (10, 20) according to any one of claims 1 to 3 and claims 9 to 11, in cabling for circuitry for an electric heater.

## Patentansprüche

1. Flacher, elektrischer Draht bzw. Kabel (10, 20) mit einem im wesentlichen rechteckigen Querschnitt, wobei der Draht (10, 20) ein flaches längliches Element (11), das im wesentlichen ein elektrisch leitfähiges Teil enthält, und eine Isolationsbeschichtung (12, 23) umfaßt, **dadurch gekennzeichnet, daß** die Beschichtung (12, 23) ein Polymer auf Benzimidazol-Basis umfaßt.

2. Flacher, elektrischer Draht (10, 20) nach Anspruch 1, wobei das Polymer auf Benzimidazolbasis ein Produkt ist, erhältlich durch Umsetzen einer Vielzahl von Polymeren mit der Formel (I): 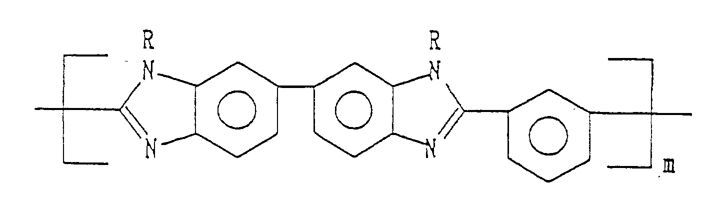 worin der Rest R für ein Element steht, ausgewählt aus der Gruppe, bestehend aus einem Wasserstoffatom und einem Alkylrest mit 1 bis 4 Kohlenstoffatomen, und m für eine ganze Zahl steht, die mindestens gleich 5 ist und ausgewählt ist, Lösungsmittel-lösliche Polymere zu ergeben.

3. Flacher, elektrischer Draht (10, 20) nach Anspruch 1 oder 2, wobei das flache längliche Element (11) entweder ein elektrischer Draht oder ein elektrischer Draht (21), beschichtet mit einer Isolationsschicht (22), ist.

4. Verfahren zum Herstellen eines flachen elektrischen Drahts (10, 20) mit einem im wesentlichen rechteckigen Querschnitt, wobei der Draht (10, 20) ein flaches längliches Element (11), das mindestens ein elektrisch leitfähiges Teil enthält, und eine Isolationsbeschichtung (12, 23) umfaßt, **dadurch gekennzeichnet, daß** die Beschichtung (12, 23) ein Polymer auf Benzimidazol-Basis umfaßt, und das Verfahren die Schritte umfaßt:
a) Lösen einer Vielzahl von Polymeren auf Benzimidazol-Basis in einem Lösungsmittel, wodurch eine Lacklösung erhalten wird;
b) Bereitstellen eines länglichen Elements (16) mit einem im wesentlichen kreisförmigen Querschnitt;
c) Aufbringen der Lacklösung auf das längliche Element (16), wodurch ein längliches Element (16), bedeckt mit der Lacklösung, erhalten wird;
d) Erhitzen des mit Lack bedeckten länglichen Elements (16) zum Umsetzen der Vielzahl von Polymeren auf Benzimidazol-Basis, wodurch das längliche Element (16) mit dem durch die Umsetzung erhaltenen Produkt (17) beschichtet wird;
e) sofern angemessen, Wiederholen der Schritte c) und d), und
f) Walzen des beschichteten länglichen Elements (15) mit einem im wesentlichen kreisförmigen Querschnitt, wodurch ein im wesentlichen flacher elektrischer Draht (10, 20) erhalten wird, der mit dem Produkt beschichtet ist, das durch Umsetzen der Vielzahl von Polymeren auf Benzimidazol-Basis erhalten wird, wobei der Draht (10, 20) einen im wesentlichen rechteckigen Querschnitt aufweist.

5. Verfahren nach Anspruch 4, wobei das verwendete Lösungsmittel in Schritt a) ein alkalisches Lösungsmittel ist.

6. Verfahren nach Anspruch 4 und 5, weiter umfassend den Schritt des Zugebens eines eine radikalische Polymerisation initiierenden Mittels in der in Schritt a) verwendeten Lacklösung.

7. Verfahren nach einem der Ansprüche 4 bis 6, wobei die in Schritt a) verwendete Vielzahl von Polymeren auf Benzimidazol-Basis die Formel (I) aufweist: 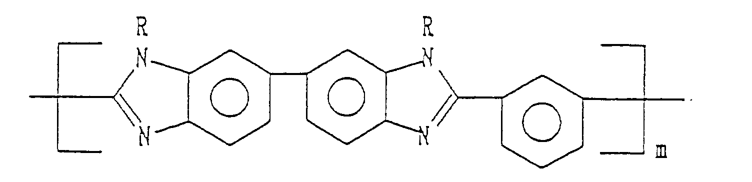 worin der Rest R für ein Element steht, ausgewählt aus der Gruppe, bestehend aus einem Wasserstoffatom und einem Alkylrest mit 1 bis 4 Kohlenstoffatomen, und m für eine ganze Zahl steht, die mindestens gleich 5 ist und ausgewählt ist, Lösungsmittel-lösliche Polymere zu ergeben.

8. Verfahren nach einem der Ansprüche 4 bis 7, wobei das längliche Element (16) mit einem im wesentlichen kreisförmigen Querschnitt entweder ein elektrischer Draht oder ein elektrischer Draht, beschichtet mit einer Isolationsschicht, ist.

9. Flacher elektrischer Draht (10, 20) mit einem im wesentlichen rechteckigen Querschnitt, wobei der Draht (10, 20) ein flaches längliches Element (11), das mindestens ein elektrisch leitfähiges Teil enthält, und eine Isolationsbeschichtung (12, 23) umfaßt, **dadurch gekennzeichnet, daß** die Beschichtung (12, 23) ein Polymer auf Benzimidazol-Basis umfaßt, Temperaturen im Übermaß von annähernd 350°C und hoher Spannung widersteht und der flache elektrische Draht (10, 20) durch das Verfahren erhältlich ist, umfassend die Schritte:
a) Lösen einer Vielzahl von Polymeren auf Benzimidazol-Basis in einem Lösungsmittel, wodurch eine Lacklösung erhalten wird;
b) Bereitstellen eines länglichen Elements (16) mit einem im wesentlichen kreisförmigen Querschnitt;
c) Aufbringen der Lacklösung auf das längliche Element (16), wodurch ein längliches Element (16), bedeckt mit der Lacklösung, erhalten wird;
d) Erhitzen des mit Lack bedeckten länglichen Elements (16) zum Umsetzen der Vielzahl von Polymeren auf Benzimidazol-Basis, wodurch das längliche Element (16) mit dem durch die Umsetzung erhaltenen Produkt (17) beschichtet wird;
e) sofern angemessen, Wiederholen der Schritte c) und d), und
f) Walzen des beschichteten länglichen Elements (15) mit einem im wesentlichen kreisförmigen Querschnitt, wodurch ein im wesentlichen flacher elektrischer Draht (10, 20) erhalten wird, der mit dem Produkt beschichtet ist, das durch Umsetzen der Vielzahl von Polymeren auf Benzimidazol-Basis erhalten wird, wobei der Draht (10, 20) einen im wesentlichen rechteckigen Querschnitt aufweist.

10. Flacher elektrischer Draht (10, 20) nach Anspruch 9, wobei das Polymer auf Benzimidazolbasis ein Produkt ist, erhältlich durch Umsetzen einer Vielzahl von Polymeren mit der Formel (I): 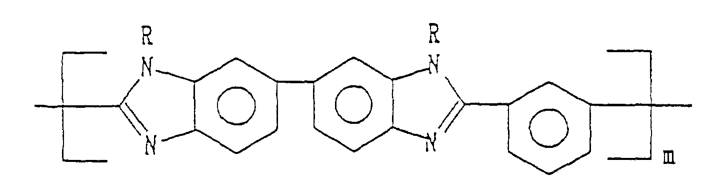 worin der Rest R für ein Element steht, ausgewählt aus der Gruppe, bestehend aus einem Wasserstoffatom und einem Alkylrest mit 1 bis 4 Kohlenstoffatomen, und m für eine ganze Zahl steht, die mindestens gleich 5 ist und ausgewählt ist, Lösungsmittel-lösliche Polymere zu ergeben.

11. Flacher elektrischer Draht (10, 20) nach Anspruch 9 oder 10, wobei das flache längliche Element (11) entweder ein elektrischer Draht oder ein elektrischer Draht (21), beschichtet mit einer Isolationsschicht (22), ist.

12. Verwendung des flachen elektrischen Drahts (10, 20) nach einem der Ansprüche 1 bis 3 und Ansprüchen 9 bis 11 zur Verkabelung für einen Stromkreis bzw. Schaltungen in einem Luftfahrzeug.

13. Verwendung des flachen elektrischen Drahts (10, 20) nach einem der Ansprüche 1 bis 3 und Ansprüchen 9 bis 11 zur Verkabelung für einen Stromkreis bzw. Schaltungen für Hochspannungsanwendungen.

14. Verwendung des flachen elektrischen Drahts (10, 20) nach einem der Ansprüche 1 bis 3 und Ansprüchen 9 bis 11 zur Verkabelung für einen Stromkreis bzw. Schaltungen für eine Kommunikationsvorrichtung.

15. Verwendung des flachen elektrischen Drahts (10, 20) nach einem der Ansprüche 1 bis 3 und Ansprüchen 9 bis 11 zur Verkabelung für einen Stromkreis bzw. Schaltungen für ein elektrisches Heizgerät.

## Revendications

1. Fil électrique plat (10, 20) de section sensiblement rectangulaire, ledit fil électrique (10, 20) comprenant un élément plat allongé (11) contenant au moins une partie électriquement conductrice ; et un revêtement isolant (12, 23),
**caractérisé en ce que** ledit revêtement (12, 23) est composé d'un polymère à base de benzimidazole.

2. Fil électrique plat (10, 20) selon la revendication 1, dans lequel ledit polymère à base de benzimidazole est un produit que l'on peut obtenir en faisant réagir plusieurs polymères de formule (I) : 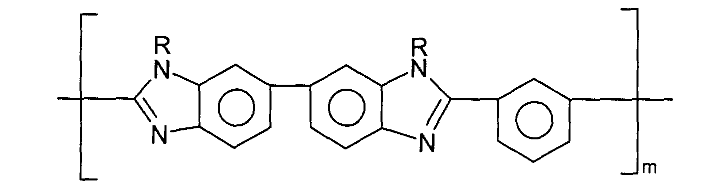 dans laquelle R indique un élément choisi dans l'ensemble constitué d'un atome d'hydrogène et d'un groupe alkyle ayant de 1 à 4 atomes de carbone ; et m indique un nombre entier au moins égal à 5 et est choisi pour produire des polymères solubles dans un solvant.

3. Fil électrique plat (10, 20) selon la revendication 1 ou 2, dans lequel ledit élément plat allongé (11) est un fil conducteur ou bien un fil conducteur (21) revêtu d'une couche isolante (22).

4. Procédé de préparation d'un fil électrique plat (10, 20) de section sensiblement rectangulaire, ledit fil électrique (10, 20) comprenant un élément plat allongé (11) contenant au moins une partie électriquement conductrice ; et un revêtement isolant (12, 23),
**caractérisé en ce que** ledit revêtement (12, 23) est composé d'un polymère à base de benzimidazole et **en ce que** ledit procédé comprend les étapes consistant à :
a) dissoudre plusieurs polymères à base de benzimidazole dans un solvant afin d'obtenir une solution de vernis ;
b) fournir un élément allongé (16) de section sensiblement circulaire ;
c) appliquer ladite solution de vernis sur l'élément allongé (16) afin d'obtenir un élément allongé (16) recouvert de ladite solution de vernis ;
d) cuire ledit élément allongé (16) recouvert de vernis afin de faire réagir lesdits plusieurs polymères à base de benzimidazole, de telle manière que ledit élément allongé (16) soit revêtu du produit (17) obtenu au moyen de ladite réaction ;
e) répéter, si nécessaire, les étapes c) et d) ; et,
f) laminer ledit élément allongé ainsi revêtu (15) et de section sensiblement circulaire, afin d'obtenir un fil électrique sensiblement plat (10, 20) revêtu du produit obtenu en faisant réagir lesdits plusieurs polymères à base de benzimidazole, ledit fil électrique (10, 20) ayant une section sensiblement rectangulaire.

5. Procédé selon la revendication 4, dans lequel ledit solvant utilisé à l'étape a) est un solvant alcalin.

6. Procédé selon la revendication 4 ou 5, comprenant en plus l'étape qui consiste à ajouter un amorceur de polymérisation radicalaire à ladite solution de vernis utilisée à l'étape a).

7. Procédé selon l'une quelconque des revendications 4 à 6, dans lequel lesdits plusieurs polymères à base de benzimidazole utilisés à l'étape a) ont la formule (I) : 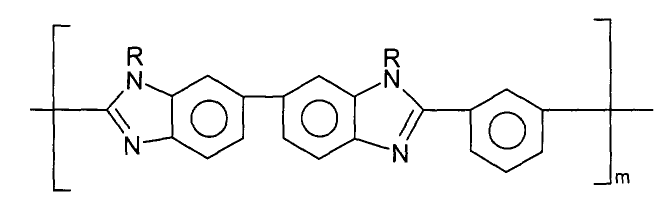 dans laquelle R indique un élément choisi dans l'ensemble constitué d'un atome d'hydrogène et d'un groupe alkyle ayant de 1 à 4 atomes de carbone ; et m indique un nombre entier au moins égal à 5 et est choisi pour produire des polymères solubles dans un solvant.

8. Procédé selon l'une quelconque des revendications 4 à 7, dans lequel ledit élément allongé (16) de section sensiblement circulaire est un fil conducteur ou bien un fil conducteur revêtu d'une couche isolante.

9. Fil électrique plat (10, 20) de section sensiblement rectangulaire, ledit fil électrique (10, 20) comprenant un élément plat allongé (11) contenant au moins une partie électriquement conductrice ; et un revêtement isolant (12, 23), **caractérisé en ce que** ledit revêtement (12, 23) est composé d'un polymère à base de benzimidazole, résistant à des températures supérieures à approximativement 350°C et à la haute tension, et **en ce que** ledit fil électrique plat (10, 20) peut être obtenu à l'aide du procédé comprenant les étapes qui consistent à :
a) dissoudre plusieurs polymères à base de benzimidazole dans un solvant afin d'obtenir une solution de vernis ;
b) fournir un élément allongé (16) de section sensiblement circulaire ;
c) appliquer ladite solution de vernis sur ledit élément allongé (16) afin d'obtenir un élément allongé (16) recouvert de ladite solution de vernis ;
d) cuire ledit élément allongé (16) recouvert de vernis afin de faire réagir lesdits plusieurs polymères à base de benzimidazole, de telle manière que ledit élément allongé (16) soit revêtu du produit (17) obtenu au moyen de ladite réaction ;
e) répéter, si nécessaire, les étapes c) et d) ; et,
f) laminer ledit élément allongé ainsi revêtu (15) et de section sensiblement circulaire afin d'obtenir un fil électrique sensiblement plat (10, 20) revêtu du produit obtenu en faisant réagir lesdits plusieurs polymères à base de benzimidazole, ledit fil électrique (10, 20) ayant une section sensiblement rectangulaire.

10. Fil électrique plat (10, 20) selon la revendication 9, dans lequel ledit polymère à base de benzimidazole est un produit que l'on peut obtenir en faisant réagir plusieurs polymères de formule (I) : 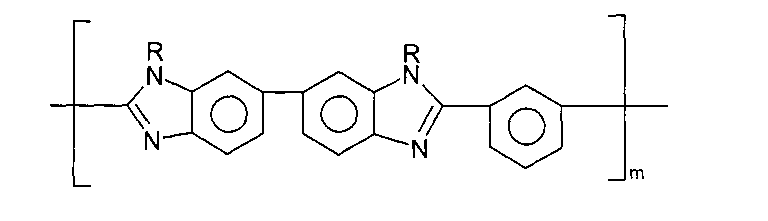 dans laquelle R indique un élément choisi dans l'ensemble constitué d'un atome d'hydrogène et d'un groupe alkyle ayant de 1 à 4 atomes de carbone ; et m indique un nombre entier au moins égal à 5 et est choisi pour produire des polymères solubles dans un solvant.

11. Fil électrique plat (10, 20) selon la revendication 9 ou 10, dans lequel ledit élément plat allongé (11) est un fil conducteur ou bien un fil conducteur (21) revêtu d'une couche isolante (22).

12. Utilisation du fil électrique plat (10, 20) selon l'une quelconque des revendications 1 à 3 et des revendications 9 à 11, dans un câblage de circuits dans un avion.

13. Utilisation du fil électrique plat (10, 20) selon l'une quelconque des revendications 1 à 3 et des revendications 9 à 11, dans un câblage de circuits pour des applications à haute tension.

14. Utilisation du fil électrique plat (10, 20) selon l'une quelconque des revendications 1 à 3 et des revendications 9 à 11, dans un câblage de circuits d'un appareil de communications.

15. Utilisation du fil électrique plat (10, 20) selon l'une quelconque des revendications 1 à 3 et des revendications 9 à 11, dans un câblage de circuits d'un appareil de chauffage électrique.
